Europäisches Patentamt

European Patent Office

Office européen des brevets

(19)

(11) **EP 0 962 152 B1**

(12) **FASCICULE DE BREVET EUROPEEN**

(45) Date de publication et mention
de la délivrance du brevet:
**29.09.2004   Bulletin 2004/40**

(51) Int Cl.7: **A23L 1/214**, A23L 1/308

(21) Numéro de dépôt: **99401233.4**

(22) Date de dépôt: **21.05.1999**

(54) **Complément alimentaire, riche en sucre, composé de racines broyées et séchées, telles que betteraves sucrières; sa préparation**

Zuckerreiches Nahrungsergänzungsmittel aus vermahlten und getrockneten Wurzeln, wie Zuckerrüben und Herstellung desselben

Sugar rich food supplement made of milled and dried roots such as sugar beet and preparation thereof

(84) Etats contractants désignés:
**BE DE DK ES IT NL**

(30) Priorité: **03.06.1998  FR 9806948**

(43) Date de publication de la demande:
**08.12.1999   Bulletin 1999/49**

(73) Titulaire: **Saint-Louis Sucre S.A.**
**75008 Paris (FR)**

(72) Inventeur: **Marie-Persyn, Francoise**
**27190 Faverolles la Campagne (FR)**

(74) Mandataire: **Orès, Bernard et al**
**Cabinet ORES**
**36,rue de St Pétersbourg**
**75008 Paris (FR)**

(56) Documents cités:
**WO-A-87/06798**          **WO-A-87/06799**
**WO-A-95/25440**          **FR-A- 929 658**
**US-A- 4 770 883**

EP 0 962 152 B1

## Description

L'invention se rapporte à un produit d'apport de qualité alimentaire, constitué essentiellement à partir d'une réduction en particules de racines riches en sucre, notamment betteraves sucrières, la composition des particules, sensiblement homogène, étant en pourcentage pondéral de : 65 à 80 % de saccharose, 10 à 25 % de fibres végétales, 0,5 à 1,5 d'acides gras, 3 à 6 % de protéines végétales, 1 à 3 % de sels minéraux et un taux de matière sèche d'au moins 90 %.

L'invention se rapporte également à un procédé de préparation d'un tel produit de qualité alimentaire à partir de betteraves sucrières.

On a songé à utiliser directement de la pulpe de betterave sucrière pour apporter à des produits alimentaires un appoint de saccharose, en conservant les éléments lipidiques, protidiques, les fibres végétales et les vitamines de la racine. On a rencontré des difficultés de conservation, pour qu'il n'apparaisse pas de goûts désagréables.

On a préconisé divers traitements de la pulpe de betterave sucrière pour réduire son goût désagréable tout en profitant de l'apport en saccharose et de la richesse relative en fibres végétales, pour l'incorporer à divers produits, tels que des produits à grignoter, ou des céréales pour petit-déjeuner.

Le document WO 95/25440 décrit un produit alimentaire préparé à partir de betteraves sucrières à haute teneur en saccharose et dépourvu de goût désagréable, où les betteraves après ablation de leur bouquet de feuilles et lavage sont découpées en morceaux tels que des dés, puis immédiatement blanchies à l'eau à au moins 87°C, ou mieux à la vapeur à 105 °C, et ensuite séchées à une température comprise entre 100 et 130 °C, jusqu'à un taux de matière sèche supérieur à 90 %. Après refroidissement, le produit obtenu peut être broyé. Le document enseigne que le blanchiment, effectué sur des morceaux dont le rapport surface / volume est suffisamment faible (proches du cube notamment) ne ferait perdre qu'une quantité limitée de sucre, tandis qu'il inactiverait les enzymes responsables du brunissement de la pulpe et de l'apparition des odeurs et goûts désagréables.

Le blanchiment s'effectue typiquement à 90-100° pendant 2 à 10 minutes ; la teneur finale en saccharose serait d'au moins 40 % et pourrait dépasser 60 %. Cette teneur est déterminée en faisant macérer un échantillon dans une solution d'acétate de plomb, en filtrant la solution et en déterminant la teneur en saccharose par polarimétrie classique. Cette méthode est très voisine de la méthode classique de détermination la teneur en saccharose des betteraves, où un poids déterminé de cossettes est placé dans un « mixer » à lames turmix avec une solution de sous acétate de plomb, le mixer est lancé à grande vitesse, la suspension obtenue est, après refroidissement, filtrée, et le filtrat est placé dans un polarimètre pour dosage du saccharose. Le séchage consécutif au blanchiment conduit à développer un goût de malt, attribuable à une caramélisation partielle du fructose. Le processus suivant WO 95/25440 conduit à une perte de sucre, lors du blanchiment, qui semble atteindre environ 10 % au moins. Par ailleurs, on notera que le produit reçoit une addition d'huile pour réduire la tendance à l'agglomération et protéger l'arôme malt.

Le document US 4,770,883 décrit un procédé de segmentation et de déshydratation pour la production d'un édulcorant naturel à partir de betteraves sucrières. Ce procédé permet de limiter la contamination bactérienne et la fermentation enzymatique responsable de l'apparition d'un goût désagréable du produit obtenu. La caractéristique essentielle de ce procédé réside dans l'utilisation d'une lame à haute vitesse chauffée et dans le fait que les fragments de betteraves sont immédiatement déshydratés dans une atmosphère chauffée, sans aucune exposition intermédiaire non stérile.

Les travaux de la Demanderesse ont visé à mettre au point un produit d'apport de qualité alimentaire dérivé de racines riches en sucre, telle que les betteraves sucrière, qui conserverait pratiquement tous les constituants de la racine malgré une élimination de la majeure partie de son eau, aurait une qualité gustative satisfaisante, se conserverait bien, en vue d'une substitution à du sucre dans la préparation de produits de grignotage ou « snacks » selon la désignation courante dans le domaine alimentaire, et de produits pour petit-déjeuner, du genre céréales.

L'invention a pour objet un produit d'apport de qualité alimentaire, constitué essentiellement à partir d'une réduction en particules de racines riches en sucres, notamment betteraves sucrières, la composition des particules, sensiblement homogène, présentant un taux de matière sèche d'au moins 90 %, cette matière sèche comprenant, en pourcentage pondéral, de: 65 à 80 % de saccharose, 10 à 25 % de fibres végétales, 0,5 à 1.5 % d'acides gras, 3 à 6 % de protéines végétales, 1 à 3 % de sels minéraux, caractérisé en ce qu'au moins 20 % du saccharose présent se trouve sous forme masquée, sensiblement inextractible par une solution d'acétate de plomb.

Il est remarquable que l'extraction du saccharose de cossettes à l'acétate de plomb est pratiquement exhaustive. Par contraste, pour obtenir l'épuisement en saccharose du produit selon l'invention il apparaît nécessaire de répéter l'opération d'extraction à l'acétate de plomb au moins quatre fois, avec chaque fois un passage au mixer. On suppose que le masquage du saccharose correspond à un emprisonnement de ce saccharose entre des éléments de paroi primaire et de paroi secondaire des cellules de la racine, rendus imperméables au saccharose.

La Demanderesse a constaté que des propriétés intéressantes étaient liées à la présence d'une proportion importante, (au moins 20 %, de préférence 30, et mieux encore 40 %), de saccharose masqué. Le produit ne prend pas de goût désagréable lors de sa préparation, de sorte qu'une opération de blanchiment devient inutile, et que le taux de saccharose reste élevé. En outre, de façon étonnante, le produit ajouté, en substitution à du saccharose, dans la préparation d'un produit extrudé à base de céréales pour petit-déjeuner, s'expanse à la manière des produits expansés salés du genre pour apéritif.

Il a été constaté également que le produit d'apport présentait un pouvoir de rétention d'eau relativement important. Ce pouvoir de rétention décroît toutefois avec la dimension des particules, passant, en grammes d'eau par gramme de produit, de 8,8 g/g environ pour des particules de dimension supérieure à 315 μm, de 7 g/g pour des particules comprises entre 315 et 125 μm pour tomber à 5 g/g pour des particules inférieures à 125 μm. Le produit présente, en annexe à ce pouvoir de rétention d'eau, un pouvoir filmogène notable.

Le produit selon l'invention possède en outre un pouvoir de rétention notable pour les huiles et pour les arômes.

L'invention a aussi pour objet un produit alimentaire dérivé d'un produit d'apport du genre précédent, qui incorpore, en proportions pondérales, au moins 40 % dudit produit d'apport, à côté de produits de complément protidique et lipidique. Il est apparu que l'ajout de compléments protidiques et lipidiques lors de l'élaboration du produit d'apport avait une influence favorable sur les propriétés diététiques et organoleptiques du produit alimentaire.

Complément protidique et lipidique signifie ici que le produit alimentaire obtenu est mieux équilibré en protéines et corps gras que le produit d'apport où le saccharose est largement majoritaire. Par exemple, on pourra ajouter au broyat de betteraves, une suspension aqueuse d'amidon et de poudre de cacao.

L'invention a encore pour objet un procédé de préparation d'un produit d'apport de qualité alimentaire comportant, en pourcentage pondéral, de 65 à 80 % de saccharose, 10 à 25 % de fibres végétales, 0,5 à 1,5 % d'acides gras, 3 à 6 % de protéines végétales et 1 à 3 % d'acides minéraux, où :

    a) l'on réduit des betteraves sucrières en fragments;
    b) on broie ces fragments en particules passant au moins à la maille de 2 mm ;
    c) on fait passer les particules par une étape de séchage à chaud jusqu'à réduire le taux d'eau contenue dans les particules à 10 % au plus ;

caractérisé en ce que l'on règle conjointement la durée de passage des particules à l'étape de séchage et la température en sorte de la teneur pondérale des particules en saccharose masqué soit d'au moins 20 % de celle du saccharose total.

Après l'étape de séchage, le produit de complément présente un aspect de flocons (au sens que l'homme du métier donne à ce terme dans l'industrie alimentaire, c'est-à-dire un produit pulvérulent, de faibles dimensions, de densité apparente faible, et « coulant ».

Il va de soi que, plus la température est élevée, plus le temps requis est bref.

De préférence, à l'étape de séchage (c), les particules sont mises en contact avec une paroi à température supérieure à 100 °C. l'humidité contenue passe ainsi directement à l'état de vapeur.

Sans que la Demanderesse en ait la certitude, il semble probable que le maintien d'une part notable du saccharose à l'état masqué soit obtenu grâce à la vitesse d'élimination de l'eau, favorisée par la réduction de taille des particules de betteraves conduisant à une augmentation du rapport surface / volume, de sorte que cette eau est éliminée sans que la détérioration des éléments de paroi de cellules réduise le masquage du saccharose. Il y aurait encollage de paroi 1 à paroi 2 avec blocage du saccharose.

La Demanderesse a constaté qu'il y avait une corrélation entre la destruction de la liaison masquante du saccharose et le taux de destruction des aminoacides constituant des protéines, notamment l'aminoacide le plus fragile, la lysine. En conséquence, il est possible de vérifier, en dosant la lysine avant et après séchage, que le séchage de la matière broyée est adapté à conserver le taux de saccharose masqué si la teneur en lysine n'a pas varié de façon significative. On obtient ainsi un critère de l'efficacité de l'étape de séchage sans être obligé de répéter plusieurs fois l'extraction à l'acétate de plomb pour apprécier le taux de masquage du saccharose.

On préfère, à l'issue de l'étape (a) de réduction en cossettes, ajouter de 0,5 à 1,0 % d'acide citrique. On réduit ainsi la tendance de la pulpe de betterave à s'oxyder et développer des goûts désagréables.

Pour obtenir un produit alimentaire dérivé du produit d'apport selon l'invention, (a) on réduit en fragments des betteraves sucrières ; (b) on broie les fragments en particules passant au moins à la maille de 2 mm ; (b') on mélange aux particules une suspension aqueuse desdits produits de compléments protidique et lipidique ; et (c) on fait passer le mélange par une étape de séchage jusqu'à réduire la teneur en eau contenue à 10% au plus, la durée de séchage et la température étant réglées conjointement en sorte que la teneur pondérale en saccharose masqué soit d'au moins 20 % de la teneur en saccharose total.

Des caractéristiques secondaires et les avantages de l'invention ressortiront d'ailleurs de la description qui va suivre, accompagnée d'exemples.

Dans ce qui suit, la matière de départ sera, sauf mention explicite, la betterave sucrière, en raison de sa richesse en saccharose et de son goût propre discret.

**Exemple 1.**

Préparation d'un produit d'apport à partir de betteraves sucrières.

On prend des betteraves sucrières fraîchement lavées, ayant une teneur en eau d'environ 80 %, la matière sèche comprenant entre 65 et 80 % de saccharose.

300 kg de ces betteraves sont introduites dans une déchiqueteuse pour être réduites en fragments irréguliers de dimensions comprises entre 5 mm et 10 cm.

On observera que l'on pourrait partir de cossettes réalisées pour l'extraction du sucre classique, mais que la régularité d'épaisseur exigée des cossettes est inutile pour la préparation du produit de l'invention.

Les fragments sont additionnés d'acide citrique sec, à raison de 0,7 % en poids, pour éviter une oxydation dans la période qui sépare le déchiquetage du broyage qui doit suivre. Le pH de la masse des fragments est alors de 3,9 (l'abaissement du pH fait qu'il y a peu de réactions enzymatiques, quelles qu'elles soient).

Les fragments sont ensuite broyés dans un affineur COMITROL 1700 de la Société URSCHELL pendant 8 minutes pour obtenir un broyat de la consistance d'une purée. Les particules du broyat ont des dimensions moyennes de l'ordre du millimètre.

Cette purée est alors séchée sur un cylindre DUPRAT, chauffé à la vapeur à 4 bars, soit une température d'environ 137 °C ; la purée est admise à la surface du cylindre chauffé, déversée entre le cylindre et des cylindres satellites en une couche mince, et détachée de la surface chauffée par une lame racleuse après un séjour de 20 secondes, déterminé par l'arc parcouru entre le satellite et la lame racleuse, ainsi que par la vitesse de rotation du cylindre chauffé. Le produit séché se présente en masse pulvérulente de flocons de densité apparente de 0,17 environ.

Le produit présente un taux de matière sèche de 93 +/- 0,5 %.

La composition globale de la matière sèche en pourcentage pondéral est la suivante :

| | |
|---|---|
| Saccharose libre (extrait à l'acétate de plomb, première passe) | 43 +/- 1 |
| Saccharose masqué (extrait à l'acétate passes 2 à 4) | 32 +/- 1,5 |
| Fibres végétales | 15 |
| Sels minéraux | 1,79 +/- 0,06 |
| Protéines végétales | 4,28 +/- 0,30 |

La composition de protéines végétales est la suivante en pourcentage pondéral :

| Aminogramme | | | |
|---|---|---|---|
| Cystine | 0,05 | Méthionine | 0,10 |
| Acide aspartique | 0,36 | Thréonine | 0,20 |
| Sérine | 0,23 | Acide glutamique | 0,53 |
| Proline | 0,13 | Glycine | 0,18 |
| Cystine | 0,05 | Alanine | 0,19 |
| Valine | 0,24 | Isoleucine | 0,15 |
| Leucine | 0,24 | Tyrosine | 0,20 |
| Phénylalanine | 0,15 | Lysine | 0,36 |
| Histidine | 0,21 | Arginine | 0,18 |
| Tryptophane | 0,0104 | | |

| Composition en acides gras (g %) | | | |
|---|---|---|---|
| A caproléique C 1010 | > 0,1 | A laurique C 1210 | 0,7 |
| A myristique C 1410 | 1,25 | A myristoléique C 1411 | > 0,1 |
| A pentadécanoïque C 1510 | 0,35 | A palmitique C 1610 | 14,1 |
| A palmitoléique C 1611 | 0,5 | A margarique C 1710 | 0,4 |
| A heptadécènoïque C 1711 | 0,25 | A stéarique C 1810 | 3,8 |
| A oléïque C 1811 | 8,5 | A linoléïque C 1812 | 3,4 |
| A linolénique C 1813 | 3,4 | A arachidique C 2010 | 0,4 |
| A gadoléïque C 2011 | 0,4 | A béhénique C 2210 | 0,7 |

(suite)

| Composition en acides gras (g %) | | | |
|---|---|---|---|
| A érucique C 2211 | 0,3 | A lignocérique C 2410 | 3,4 |

| Métaux et métalloïdes | | | |
|---|---|---|---|
| Phosphore | 80 mg/100g | Arsenic | 0,14 mg/kg |
| Cadmium | 0,21 mg/kg | Calcium | 0,306 % |
| Cuivre | 4 mg/kg | Fer | 139 mg/kg |
| Magnésium | 0,0842 % | Mercure | < 0,01 mg/kg |
| Plomb | 0,3 mg/kg | Potassium | 0,252 % |
| Sodium | 0,0354 % | Zinc | 10 mg/kg |

La teneur en lysine du produit donnée ci-dessus, rapportée à la matière sèche, est pratiquement la même que celle qui a été relevée sur le broyat, et n'a donc pas été altérée par le séchage.

**Exemple 2** (comparatif)

Un produit a été fabriqué conformément à l'exemple 1, à l'exception du processus de séchage. L'aminogramme fait apparaître une teneur pratiquement nulle en lysine. L'extraction du saccharose par l'acétate de plomb se montre totale à la première passe. Ce produit sera dit ci-après produit sans lysine.

**Exemple 3** (comparatif)

On a fabriqué un produit suivant les enseignements du document WO 95/25440. Ce produit sera dit WO 95/25440.

Les propriétés des trois produits sont comparés dans le tableau 1 suivant :

| | Produit selon l'invention | Produit sans lysine | Produit selon WO 95/25440 |
|---|---|---|---|
| Densité apparente | 0,1 | 0,57 | Non mesuré |
| Capacité de rétention d'eau (g eau/g produit) | 8.8 | 3,2 | 6-8 |
| Saccharose libre (%) | 43 | 75 | 60-75 |
| Saccharose masqué (%) | 32 | 0 | 0 |
| Lysine (%) | 0,36 | 0 | 0 |
| Couleur | Blanche | Anthracite | Blanche |

La teneur en saccharose de la matière de départ rapportée à la matière sèche est de 75%. La teneur en lysine de cette matière de départ est de 0,36 %. Il n'y a pas de perte de saccharose dans le produit selon l'invention, mais masquage de 43 % de ce saccharose. Par contraste le produit sans lysine ne contient pas de saccharose masqué. On verra plus loin les différences de comportement de ces deux produits pour la confection de produits alimentaires, on constate par ailleurs que le produit sans lysine présente un comparativement faible pouvoir de rétention d'eau.

Le produit selon l'invention est en outre plus riche en saccharose que le produit selon WO 95/25440 ; le comportement lors de l'élaboration de produits alimentaires par extrusion du produit selon l'invention sera très différent de celui du produit selon WO 95/25440, comme le montreront les exemples suivants.

On a exécuté une série d'essais de préparation de produits extrudés, de types céréales pour petit-déjeuner et snacks. L'extrudeuse était du type BC 21 fourni par la société CLEXTRAL, avec une filière de diamètre 3 mm. Les paramètres de l'extrusion sont indiqués dans le tableau 2 suivant:

| Type | Unité | Consigne | Mesuré | Max | | Zone | Consigne | Mesuré | Puiss. |
|---|---|---|---|---|---|---|---|---|---|
| Vit. Vis | Min$^{-1}$ | 600 | 600 | 682 | | 1 | 0 | 20-25 | 500 |

(suite)

| Type | Unité | Consigne | Mesuré | Max | | Zone | Consigne | Mesuré | Puiss. |
|------|-------|----------|--------|-----|---|------|----------|--------|--------|
| Couple Vis | Nm | - | 12-20,5 | 58 | | 2 | 50 | 54-62 | 1000 |
| Puiss. vis | kW | - | 1,570-2,651 | 8,3 | | 3 | 110 | 107-110 | 1000 |
| Doseur | kg/h | 10 | 0 | 30 | | 4 | 140 | 134-169 | 1000 |
| Eau | kg/h | 0,44 | 0 | 10 | | | | | |
| Granulat | RPM | 397 | 76-96 | 1000 | | | | | |
| Press. en Butée | Bar | | 27-40 | 300 | | | | | |

Certains paramètres dont les valeurs varient selon les exemples sont indiqués par leur fourchette.

Les valeurs de consigne n'ont pas été modifiées entre les différents essais, pour faciliter les comparaisons; mais il va de soi que pour une fabrication commerciale, les paramètres d'extrusion seront adaptés.

Les essais sur BC21 ont été confirmés sur BC 45. Le produit et les formulations sont largement industrialisables.

**Exemple 4** Préparation de céréales pour petit déjeuner, par extrusion..

On prépare un mélange intime de composition suivante (en % pondéral) :

| | | | |
|---|---|---|---|
| Farine de blé | 52,25 | Protéines | 9,94 |
| Produit selon | | Glucides * | 45,10 |
| l'exemple 1(flocons) | 20,25 | Lipides | 5,52 |
| Chocolat en poudre | 13 | Soit Fibres ** | 14,60 |
| Cacao | 11 | Sucre | 11,70 |
| Sel (NaCl) | 1 | Sel | 1,00 |
| Malt | 2,5 | Malt | 2,50 |
| | | Eau | 9,75 |

* les glucides sont déterminés par défaut = 100 - (eau+protéines+lipides+minéraux+fibres totales)

** 6,4 % des fibres sont apportées par le produit selon l'exemple 1 Densité apparente : 0,64

Au sortir de l'extrudeuse, le produit se présente sous forme oblongue, avec un diamètre de 6 mm environ et une longueur de 8 mm environ.

**Exemple 5** (comparatif) Préparation de céréales pour petit-déjeuner.

On part d'une poudre de la composition suivante, en pourcentages pondéraux :

| | | | | |
|---|---|---|---|---|
| Farine de blé | 52,25 | | Protéines | 9,60 |
| Son de blé | 4,25 | | Glucides | 46,00 |
| Sucre | 16 | | Lipides | 5,60 |
| Chocolat en poudre | 13 | soit | Fibres | 10,00 |
| Cacao | 11 | | Sucre | 16,00 |
| Sel | 1 | | Sel | 1,00 |
| Malt | 2,50 | | Malt | 2,50 |
| | | | Eau | 8,80 |

On observera que la composition globale est très voisine de celle de l'exemple 4, la teneur en fibres étant augmentée et la teneur en sucre diminuée.

On extrude ce produit, et l'on obtient des billes rondes alvéolées d'environ 7 mm de diamètre.

**Exemples 6 à 8** Préparation de céréales pour petit-déjeuner.

La composition selon l'exemple 4 est modifiées en faisant varier les proportions de produit d'apport selon l'exemple 1, de farine de blé, et de composition chocolatée, celle-ci comportant à chaque fois 47 % de chocolat en poudre, 40 % de cacao, 4 % de sel et 9 % de malt.

| exemple | 6 | 7 | 8 |
|---|---|---|---|
| % farine de blé | 47 | 47 | 28,10 |
| % produit selon l'exemple 1 | 28,20 | 28,20* | 60,10 |
| % composition chocolatée | 14,80 | 14,80 | 11,80 |

\* 10 % du produit selon l'exemple 1 est de granulométrie < 166 µm.

Les différents produits obtenus ont été estimés pour diverses propriétés, notamment leur forme, leur expansion, leur croustillance, leur dureté, leur friabilité, leur capacité d'hydratation et leur comportement en hydratation. Ces propriétés évoluent de façon monotone dans l'ordre des exemples 5, 4, 6, 7, 8. Le tableau suivant l'indique succinctement.

| Exemple | 5 | 4 | 6 | 7 | 8 |
|---|---|---|---|---|---|
| Forme | ronde (bille) d = 7 mm | Ovale L=8, d= 6 mm | Ovale L=8, d=5 mm | Ovale L=8, d=5 mm | Allongée L=12, d= 4 mm |
| Expansion<br>Croustillance<br>Dureté<br>Friabilité<br>Hydratation<br>Comportement en hydratation | Alvéolée<br>en<br>en<br>_<br>en<br>Reste en l'état | en<br>_<br>_<br>sans<br>_<br>Gonfle lentement | décroissance<br>décroissance<br>croissance<br>_<br>croissance<br>et moins<br><br>lentement | progressive<br>_<br>_<br>différence<br>_<br>se désagrège plus vite | Tassée<br>progressive<br>progressive<br>_<br>progressive<br>Désagrégation totale<br>(Soupe) |

Il apparaît dès lors que l'on peut ajuster la composition du mélange avant extrusion pour adapter les propriétés du produit pour petit-déjeuner à son utilisation, et au goût de la clientèle.

Ainsi, en réglant la quantité de produit selon l'exemple 1, on peut, soit obtenir, après dilution dans du lait, un aliment lisse à consistance de soupe, soit conserver, après cette dilution, une partie du produit expansé en suspension pour conférer à l'aliment un certain craquant.

Les exemples suivants porteront sur la préparation de produits à grignoter ou « snacks » extrudés. On a opéré avec la même extrudeuse que pour les produits pour petit-déjeuner, mais on a relevé les températures de consignes des zones 3 et 4 respectivement à 110 et 140 °C.

**Exemple 9** Préparation de snacks à base de céréales.

On prépare un mélange intime avec la composition pondérale suivante :

| | | | |
|---|---|---|---|
| Maïs | 76,30 % | protéines | 8,55 % |
| Farine de Blé | 9,10 % | Glucides* | 61,10% |
| Produit selon l'exemple 1 | 15,20 % | Lipides | 3,30 % |
| Sel | 1,20 % | Soit Fibres** | 5,20 % |
| Lait en poudre | 4,20 % | Sucre | 8,80 % |
| | | Sel | 1,20 % |
| | | Eau | 10,85 % |

\* glucides = 100 - (eau+protéines+lipides+ minéraux+fibres totales)

\*\* 4,8 % proviennent du produit selon l'exemple 1
Densité apparente : 0,560

Après extrusion, le produit expansé obtenu se présente sous forme de cylindres à extrémités arrondies, de longueur d'environ 18 mm et de diamètre d'environ 12 mm, expansés et très friables.

**Exemple 10** (comparatif) Préparation d'un snack standard à base de céréales.

Cet exemple a servi de modèle au précédent, où le produit selon l'exemple 1 (15,10 %) a remplacé du sucre poids pour poids. Il s'ensuit que la répartition en pourcentage pondéral des constituants par catégories est un peu modifiée :
Protéines 7,85 / Glucides 61,10 / Lipides 3,20 / Fibres 0,40 / Sucre 15,20 / Sel 1,20 / eau 9,75.
Après extrusion, le produit obtenu est en forme de cylindres à extrémités arrondies, de longueur d'environ 12 mm et de diamètre d'environ 7 mm. Il est faiblement alvéolé.

**Exemples 11** Préparation de snacks à partir de céréales et de produit d'apport selon l'exemple 1.

On a préparé un mélange intime de composants dans les proportions, en pourcentage pondéral, suivantes :

| Maïs | 56,10 | | Protéines | 7,70 | |
| Farine de blé | 7,30 | | Glucides | 48,49 | |
| Produit d'apport | 32,20 | soit | Lipides | | 2,80 |
| Sel | 1,00 | | Fibres | 10,50 | |
| Lait en poudre | 3,40 | | Sucre | 18,70 | |
| | | | Sel | 1,00 | |
| | | | Eau | 10,10 | |

Après extrusion le produit obtenu est en forme de cylindres à extrémités arrondies de longueur et diamètre d'environ 19 et 8 mm.

**Exemple 12** Comparaison de l'extrusion du produit selon l'exemple 1 seul.

On a tenté, à titre de comparaison, d'extruder le produit d'apport selon l'exemple 1, dans les conditions d'extrusion des exemples précédents.
Le produit obtenu n'était aucunement alvéolé ni croustillant mais très friable. La forme en était des cylindres de longueur irrégulière et de diamètre d'environ 2 mm.
On peut définir un facteur relatif d'expansion par le rapport du volume du produit obtenu au volume minimal relevé. Si $L_0$ et $d_0$ sont les longueur et diamètre minimaux, et L et d les longueur et diamètre du produit dont on estime le facteur relatif d'expansion celui-ci est :

$$E = L.d^2 / L_0.d_0^2$$

Ici nous prendrons pour $L_0$ et $d_0$ les dimensions du produit de l'exemple 8, soit 12 et 4 mm.

| Exemple | 10 | | 9 | | | 11 | | 12 |
|---|---|---|---|---|---|---|---|---|
| Forme | | 12 | | 18 | | | | |
| Longueur (L) mm | 6 | | >12 | | 19 | | 8 | Irrégulière |
| Diamètre (d) mm | | | | | | | | 2 |
| E | 2,35 | | >13,5 | | | 6,33 | | 0 |
| Alvéoles | Moyennes | | Très fortes | | | Faibles | | Sans |
| Croustillance | Moyenne | | Très bonne | | | Bonne | | Nulle |
| Friabilité | Non | | Très friable | | | Non | | Très friable |

On notera que, de façon analogue aux céréales pour petit-déjeuner, la teneur en produit d'apport selon l'exemple 1 permet de régler le facteur d'expansion, et que, de ce point de vue, l'exemple 9 paraît particulièrement favorable.
On observera qu'il était possible, selon l'état de la technique, de fabriquer des snacks à fort facteur d'expansion lorsque le produit avant extrusion ne contenait pas d'apport de sucre. Les snacks expansés sucrés étaient alors recouverts de sucre par pulvérisation sur le produit en sortie d'extrusion. Toutefois, le processus est délicat et relativement coûteux.

Les essais de la Demanderesse ont fait apparaître, en outre, que le produit d'apport de l'invention était capable de fixer des huiles, et des arômes. Cela permet d'incorporer un arôme dans la matière du produit final, au lieu de fixer cet arôme à la surface du produit, par exemple par pulvérisation d'une huile contenant cet arôme. Ces arômes susceptibles d'être fixés dans le produit d'apport sont notamment les épices, la cannelle, la bergamote, la menthe, le citron et l'orange.

Par ailleurs, la Demanderesse a mis au point la préparation directe de flocons de produits alimentaires qui dérivent des produits d'apport selon l'invention, en mélangeant le broyat de betterave et une suspension aqueuse de produits alimentaires de complément protidique et lipidique, et en procédant à un séchage rapide du mélange.

**Exemple 13** Préparation d'un produit alimentaire cacaoté.

On prépare un broyat de betterave par une réduction en fragments de betteraves sucrières lavées ; les fragments de betteraves sont additionnées de 10 % d'eau acidifiée à l'acide citrique (1 kg d'acide citrique pour 100 kg de betteraves). Cette masse est prébroyée sur COMITROL 3600, puis affinée sur COMITROL 1700.

A 46,4 parts de ce broyat de betterave acidifié on ajoute 42 parts d'eau et 4,6 parts d'amidon, puis 7,0 parts de cacao dégraissé de composition en pour-cent pondéral : Protéines 19,8 / Lipides 25,0 / Glucides 10,84 / eau 6,0 / Fibres totales 7,7 .

La masse est alors homogénéisée sur Turmix et séchée sur cylindre type DUPRAT dans des conditions voisines de celles qui ont conduit à l'obtention du produit d'apport selon l'exemple 1.

Le produit ainsi coséché contient 93,6 % de matière sèche, dont 33,8 % de saccharose. Son pH est de 4,99, la capacité de rétention d'eau de 2,3 g/g, et la densité apparente. Ce produit coséché a servi à l'élaboration d'une formulation céréales petit-déjeuner.

Après séchage le rapport betterave / cacao s'établit à 60 / 40, et les rapports betterave / amidon / cacao à 49/ 20 / 31.

**Exemple 14** Préparation de céréales petit-déieuner.

On mélange 13,06 kg de farine de blé, 1,06 kg de son de blé, 7,5 kg de produit selon l'exemple 13, 0,25 kg de sel et 0,63 kg de malt, et on le fait passer dans une extrudeuse CLEXTRAL BC 21, dans des conditions semblables à celles des exemples 4-8.

Le produit céréale obtenu se présente sous une forme analogue à celles des exemples 4 et 6-8, avec une capacité de désagrégation à l'hydratation comparable à celle de l'exemple 7.

La présente description ne s'étendra pas sur les utilisations possibles des produits d'apport selon l'invention, au delà de celles qui sont données dans des exemples, en application des propriétés de ces produits, sans exclure des utilisations non alimentaires.

Aussi, bien entendu, l'invention n'est pas limitée aux exemples décrits, mais embrasse toutes les variantes du produit, de sa préparation et de ses utilisations dans le cadre des revendications.

## Revendications

1. Particules de racines riches en sucres, notamment de betteraves sucrières, présentant un taux de matière sèche d'au moins 90 %, cette matière sèche comprenant, en pourcentage pondéral, de : 65 à 80 % de saccharose, 10 à 25 % de fibres végétales, 0,5 à 1,5 % d'acides gras, 3 à 6 % de protéines végétales, 1 à 3 % de sels minéraux, **caractérisées en ce qu'**au moins 20 % du saccharose présent se trouve emprisonné entre des éléments de paroi primaire et de paroi secondaire des cellules de la racine, rendus imperméables au saccharose.

2. Particules selon la revendication 1, **caractérisées en ce qu'**au moins 30 % du saccharose présent est sous forme masquée.

3. Particules selon la revendication 2, **caractérisées en ce qu'**au moins 40 % du saccharose présent est sous forme masquée.

4. Utilisation des particules selon l'une quelconque des revendications 1 à 3 en tant que produit d'apport de qualité alimentaire.

5. Produit alimentaire dérivé d'un produit d'apport selon la revendication 4, **caractérisé en ce qu'**il incorpore, en proportions pondérales, au moins 40 % de particules telles que définies à l'une quelconque des revendications 1 à 3, à côté de produits alimentaires de complément protidique et lipidique.

**Patentansprüche**

1.  Zuckerreiche Rübenpartikel, insbesondere von Zuckerrüben, mit einem Trockensubstanzanteil von wenigstens 90 %, wobei die Trockensubstanz, in Gewichtsprozent 65 bis 80 % Saccharose, 10 bis 25 % Pflanzenfasem, 0,5 bis 1,5 Fettsäuren, 3 bis 6 % Pflanzenproteine, 1 bis 3 % Mineralsalze umfasst, **dadurch gekennzeichnet, dass** wenigstens 20 % der vorliegenden Saccharose in primären und sekundären Zellwandbestandteilen der Rüben eingeschlossen sind, die für Saccharose impermeabel sind.

2.  Partikel nach Anspruch 1, **dadurch gekennzeichnet, dass** wenigstens 30 % der vorliegenden Saccharose in maskierter Form vorliegen.

3.  Partikel nach Anspruch 2, **dadurch gekennzeichnet, dass** wenigstens 40 % der vorliegenden Saccharose in maskierter Form vorliegen.

4.  Verwendung von Partikeln nach einem der Ansprüche 1 bis 3 zur Herstellung eines Hilfsprodukts zur Qualitätssteigerung vom Nahrungsmitteln.

5.  Aus einem Hilfsprodukt nach Anspruch 4 hergestelltes Lebensmittelprodukt, **dadurch gekennzeichnet, dass** es neben Protein- und Lipidlebensmittelergänzungsprodukten, in Gewichtsanteilen, wenigstens 40 % von in einem der Ansprüche 1 bis 3 definierten Partikel enthält.

**Claims**

1.  Sugar-rich root particles, in particular sugar beet particles, having a solids content of at least 90%, this dry material comprising 65 to 80% by weight sucrose, 10 to 25 % by weight vegetal fibers, 0.5 to 1.5% by weight fatty acids, 3 to 6% by weight vegetal proteins and 1 to 3% by weight mineral salts, **characterized in that** at least 20% of the sucrose is entrapped between components of the primary and secondary wall of the root cells, which are made impermeable to sucrose.

2.  Particles as claimed in claim 1, **characterized in that** at least 30% of the sucrose is present in a masked form.

3.  Particles as claimed in claim 2, **characterized in that** at least 40% of the sucrose is present in a masked form.

4.  Use of the particles as claimed in any one of claims 1 to 3 as a food-grade additive.

5.  A food product derived from an additive as claimed in claim 4, **characterized in that** said food product incorporates at least 40% by weight of the particles as defined in any one of claims 1 to 3, along with additional protein and fat food products.